# FASCICULE DE BREVET EUROPEEN

(11) **EP 3 030 371 B1**
(45) Date de publication et mention de la délivrance du brevet: **06.03.2019**
(21) Numéro de dépôt: 14742272.9
(22) Date de dépôt: 24.06.2014
(51) Int. Cl.: B23K 9/00, B23K 9/028, B23K 9/23, B23K 26/08, B23K 26/24, B23K 26/32

(54) **PROCEDE POUR SOUDER ENSEMBLE PAR ARC OU PAR LASER LES DEUX BORDS SUPERPOSES DE DEUX TOLES EN ACIER GALVANISE OU EN ALUMINIUM**
VERFAHREN ZUM SCHWEISSEN DURCH LICHTBOGEN- ODER LASERSCHWEISSEN ZWEIER ÜBEREINANDER ANGEORDNETER BLECHE AUS ALUMINIUM ODER VERZINKTEM STAHL
PROCESS OF WELDING TOGETHER BY ARC OR LASER WELDING TWO SUPERPOSED EDGES OF TWO SHEETS MADE OF ALUMINIUM OR GALVANISED STEEL

(30) Priorité: 07.08.2013 FR 1357842
(43) Date de publication de la demande: 15.06.2016
(73) Titulaire: PSA Automobiles SA, 78300 Poissy (FR)
(72) Inventeur: LENOIR, Romaric, 78560 Le Port Marly (FR)
(74) Mandataire: Fernandez, Francis Lionel
(86) Numéro de dépôt international: PCT/FR2014/051574
(87) Numéro de publication internationale: WO 2015/018989

(56) Documents cités:
- DE-A1- 10 309 157
- DE-A1- 19 737 160
- JP-A- 2003 305 581
- JP-A- 2004 298 964
- JP-A- 2008 194 730

## Description

La présente invention concerne un procédé pour souder ensemble les deux bords superposés de deux tôles en acier galvanisé ou en aluminium.

L'invention concerne également un assemblage entre deux pièces en tôle d'acier galvanisé ou en tôle d'aluminium obtenu par le procédé selon l'invention.

Cet assemblage peut être par exemple un ouvrant de véhicule automobile.

La caisse et les ouvrants d'un véhicule automobile sont constitués essentiellement par des assemblages entre deux tôles en acier galvanisé ou en aluminium.

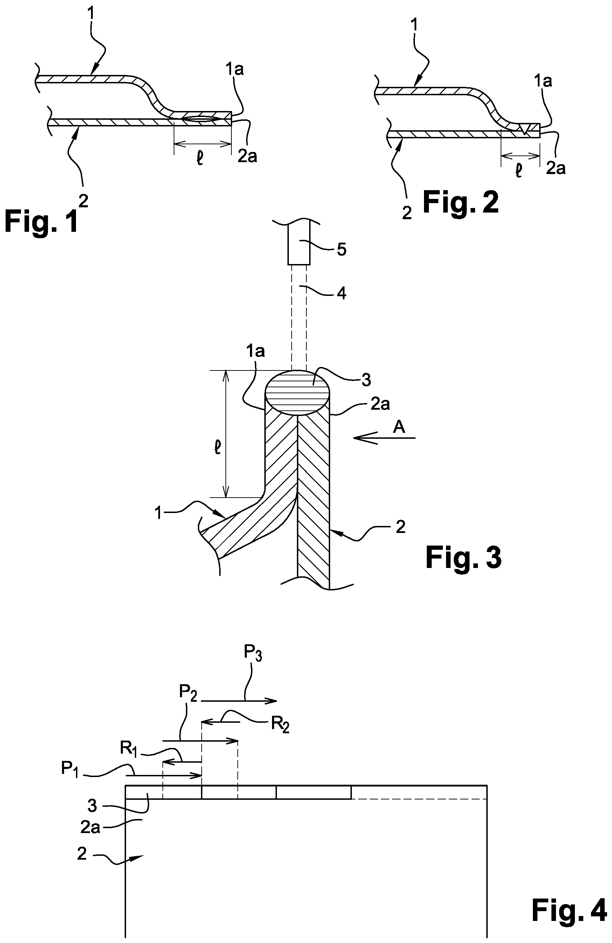

La figure 1 montre en coupe transversale l'assemblage entre deux tôles 1, 2 en acier galvanisé ou en aluminium.

Les deux bords superposés 1a, 2a forment ensemble une feuillure dont la largeur l varie en fonction du type de soudure utilisé pour souder ensemble les deux bords 1a, 2a des deux tôles 1, 2.

Dans le cas de la figure 1, la soudure réalisée entre les deux bords 1a, 2a est une soudure électrique par points.

Dans ce cas, la largeur l de la feuillure est au moins égale à 12 mm.

Dans l'exemple de la figure 2, la soudure réalisée entre les bords 1a et 2a des deux tôles 1 et 2 a été obtenue par un faisceau laser.

Dans ce cas, la largeur l de la feuillure doit être au moins égale à 6 mm.

Cette largeur est encore trop importante notamment dans le cas des encadrements des portes de véhicules automobiles.

En effet, dans ce cas, la largeur de la feuillure nécessaire pour réaliser la soudure constitue une gêne pour la visibilité à travers la partie vitrée d'une porte.

Le but de la présente invention est de remédier à cet inconvénient.

Le document DE 19737160 décrit un procédé de découpe au laser des tôles intérieure et extérieure puis d'assemblage des tôles intérieure et extérieure également par un laser.

Le document JP 2008194730 propose de réaliser un réservoir en soudant deux demi-coques ensemble. L'assemblage des deux demi-coques est réalisé bord à bord de sorte qu'une feuillure périphérique est présente et permet de réaliser une soudure par laser. Cette soudure par laser n'est pas réalisée en ligne continue mais présente une ligne formant des triangles successifs. Ces triangles sont réalisés à la place de cercles habituellement faits pour réaliser des « perles de soudure » et éviter des dégagements gazeux pouvant générés des défauts dans le soudage tout en gagnant de l'énergie.

Dans JP2004298964 (base du préambule de la reventication 1), on propose de réaliser un assemblage sur l'extrémité du bord de deux tôles en utilisant deux lasers qui se suivent.

Ce but est atteint, selon l'invention, grâce à un procédé pour souder ensemble les deux bords superposés de deux tôles en acier galvanisé ou en aluminium tel que défini dans la revendication 1, dans lequel sans éliminer la couche de zinc qui recouvre les deux tôles en acier galvanisé ou la couche d'oxyde d'aluminium qui recouvre les deux tôles en aluminium, on réalise sur les deux bords superposés des deux tôles un cordon continu de métal fondu en créant un arc électrique entre ces deux bords et une électrode ou en envoyant sur ces deux bords un faisceau laser à partir d'une tête laser, cet arc électrique ou faisceau laser étant situé dans un plan perpendiculaire au plan dans lequel sont situés les deux bords superposés, caractérisé en ce que cet arc électrique ou faisceau laser est déplacé dans le sens de la longueur de ces deux bords selon une succession de pas prédéterminés séparés par un pas en sens inverse lors duquel l'arc électrique ou le faisceau laser repasse sur le cordon de soudure créé lors du pas précédent.

Le procédé selon l'invention permet ainsi de créer un cordon de soudure au bout des deux bords superposés, ce qui permet de diminuer la largeur de la feuillure constituée par les deux tôles.

Un tel cordon de soudure est connu en lui-même, mais n'avait pas été réalisé sur des tôles en acier galvanisé ou en aluminium.

En effet, la couche de zinc qui recouvre la tôle galvanisée et la couche d'aluminium qui recouvre la tôle en aluminium ne permettent pas d'obtenir un cordon de soudure dépourvu de porosité.

Selon l'invention, il a été constaté de façon surprenante que le fait de procéder par pas successifs séparés par un pas en sens inverse permettait d'obtenir un cordon de soudure d'excellente qualité, c'est-à-dire dépourvu de pores.

Dans une version préférée de l'invention, ledit pas en sens inverse est plus court que lesdits pas prédéterminés.

De préférence également, ledit pas en sens inverse a une longueur sensiblement égale à la moitié de la longueur desdits pas prédéterminés.

A titre d'exemple, d'excellents résultats ont été obtenus lorsque la longueur de chacun desdits pas prédéterminés est égale à environ 5 mm et celle de chacun desdits pas en sens inverse est égale à environ 2,5 mm.

Une largeur de feuillure aussi faible est très avantageuse dans le cas d'un ouvrant de véhicule automobile.

D'autres particularités et avantages de l'invention apparaîtront encore tout au long de la description ci-après.

Aux dessins annexés, donnés à titre d'exemples, non limitatifs :
- la figure 3 est une vue en coupe à échelle agrandie de l'extrémité d'un assemblage de deux tôles obtenu par le procédé selon l'invention montrant l'arc électrique créé entre cette extrémité et un électrode,
- la figure 4 est une vue selon la flèche A de la figure 3 montrant les pas successifs du procédé selon l'invention.

Les figures 3 et 4 illustrent le procédé selon l'invention pour souder ensemble deux bords superposés 1a, 2a de deux tôles 1, 2 en acier galvanisé ou en aluminium.

Dans ce procédé, on n'élimine pas la couche de zinc qui recouvre les deux tôles 1, 2 en acier galvanisé ou la couche d'aluminium qui recouvre les tôles 1, 2 lorsqu'elles sont en aluminium.

Comme montré sur la figure 3, on réalise sur les deux bords superposés 1a, 2a des deux tôles 1, 2 un cordon continu de métal fondu 3 en créant un arc électrique 4 entre les deux bords 1a, 2a et une électrode 5.

Dans ce cas, le procédé de soudure est du type TIG.

On peut également réaliser le cordon de métal fondu 3 en envoyant sur les deux bords 1a, 2a un faisceau laser à partir d'une tête laser.

L'arc électrique 4 ou le faisceau laser est situé dans un plan perpendiculaire au plan dans lequel sont situés les deux bords 1a, 2a.

L'arc électrique 4 ou le faisceau est déplacé dans le sens de la longueur des bords 1a, 2a selon une succession de pas prédéterminés P₁, P₂, P₃ séparés par des pas en sens inverse R₁, R₂, comme montré sur la figure 4.

Lors des pas en sens inverse R₁, R₂, l'arc électrique 4 ou le faisceau laser repasse sur le cordon de soudure créé lors du pas précédent P₁, P₂, P₃.

Lors du premier pas P₁, la chaleur produite par l'arc électrique 4 fait fondre l'acier et vaporise le zinc de la couche galvanisée, en rendant le cordon poreux et par conséquent fragile.

Lors du pas suivant en sens inverse R₁, l'arc électrique 4 ou le faisceau laser repasse conformément à l'invention sur le cordon poreux créé lors du premier pas P₁, ce qui a pour effet de refondre ce cordon en lui conférant une structure dépourvue de pores car le zinc a été éliminé.

Le procédé ci-dessus se répète ensuite jusqu'à la fin du trajet de l'arc électrique ou du faisceau laser.

Dans le cas d'une tôle en aluminium, la couche d'aluminium a pour effet du fait de sa porosité d'absorber des agents polluants néfastes à l'égard de la tenue du cordon d'aluminium fondu.

Le fait de séparer les pas successifs P₁, P₂, P₃ vers l'avant par des pas en sens inverse permet d'éliminer totalement les polluants qui n'ont pas été éliminés complètement lors du pas précédent P₁, P₂, P₃.

Dans tous les cas, le pas en sens inverse R₁, R₂ doit être plus court que les pas P₁, P₂, P₃ pour que le cordon de soudure puisse progresser le long des bords 1a, 2a.

Ainsi, à titre d'exemple, les pas en sens inverse R₁, R₂ peuvent avoir une longueur sensiblement égale à la moitié de la longueur des pas P₁, P₂, P₃.

D'excellents résultats ont été obtenus en effectuant des pas P₁, P₂, P₃ égaux à 5 mm et des pas en sens inverse égaux à 2,5 mm.

Le procédé selon l'invention présente les deux principaux avantages suivants :
En premier lieu, il permet de souder par le bout deux pièces en tôle d'acier galvanisé ou en aluminium, sans être obligé d'éliminer préalablement la couche de zinc ou d'aluminium.
En second lieu, le fait de souder de telles pièces par le bout permet de réduire la largeur l de la feuillure formée par les deux pièces à une valeur inférieure ou égale à 3 mm, ce qui était impossible à obtenir avec les procédés classiques évoqués plus haut.

## Revendications

1. Procédé pour souder ensemble les deux bords superposés (1a, 2a) de deux tôles (1, 2) en acier galvanisé ou en aluminium, dans lequel sans éliminer la couche de zinc qui recouvre les deux tôles en acier galvanisé ou la couche d'oxyde d'aluminium qui recouvre les deux tôles en aluminium, on réalise sur les deux bords superposés (1a, 2a) des deux tôles (1, 2) un cordon continu de métal fondu (3) en créant un arc électrique (4) entre le bout de ces deux bords (1a, 2a) et une électrode (5) ou en envoyant sur le bout de ces deux bords (1a, 2a) un faisceau laser à partir d'une tête laser, cet arc électrique (4) ou faisceau laser étant situé dans un plan perpendiculaire au plan dans lequel sont situés les bouts de ces deux bords superposés (1a, 2a), **caractérisé en ce que** cet arc électrique (4) ou faisceau laser est déplacé dans le sens de la longueur de ces deux bords selon une succession de pas prédéterminés (P1, P2, P3) séparés par un pas en sens inverse (R1, R2) lors duquel l'arc électrique (4) ou le faisceau laser repasse sur le cordon de soudure créé lors du pas (P1, P2, P3) précédent.

2. Procédé selon la revendication 1, **caractérisé en ce que** ledit pas en sens inverse (R₁, R₂) est plus court que lesdits pas prédéterminés (P₁, P₂, P₃).

3. Procédé selon la revendication 2, **caractérisé en ce que** ledit pas en sens inverse (R₁, R₂) a une longueur sensiblement égale à la moitié de la longueur desdits pas prédéterminés (P₁, P₂, P₃).

4. Procédé selon l'une des revendications 2 ou 3, **caractérisé en ce que** la longueur de chacun desdits pas prédéterminés (P₁, P₂, P₃) est égale à environ 5 mm et celle de chacun desdits pas en sens inverse (R₁, R₂) est égale à environ 2,5 mm.

## Patentansprüche

1. Verfahren zum Schweißen der zwei übereinander angeordneten Ränder (1a, 2a) von zwei Blechen (1, 2) aus verzinktem Stahl oder aus Aluminium, bei dem, ohne die Zinkschicht zu entfernen, die die zwei Bleche aus verzinktem Stahl oder die Aluminiumoxidschicht bedeckt, welche die zwei Aluminiumbleche bedeckt, auf den zwei übereinander angeordneten Rändern (1a, 2a) der zwei Bleche (1, 2) ein durchgehender Strang aus geschmolzenem Metall (3) hergestellt wird, wobei ein Lichtbogen (4) zwischen dem Ende dieser zwei Ränder (1a, 2a) und einer Elektrode (5) erzeugt wird, oder wobei auf das Ende dieser zwei Ränder (1a, 2a) ein Laserstrahl von einem Laserkopf gesandt wird, wobei dieser Lichtbogen (4) oder Laserstrahl in einer Ebene senkrecht zu der Ebene, in der sich die Enden dieser zwei übereinander angeordneten Ränder (1a, 2a) befinden, angeordnet ist, **dadurch gekennzeichnet, dass** dieser Lichtbogen (4) oder Laserstrahl in Richtung der Länge dieser zwei Ränder in einer Folge von vorbestimmten Schritten (P1, P2, P3), die durch einen Schritt in die umgekehrte Richtung (R1, R2) getrennt sind, bei dem der Lichtbogen (4) oder der Laserstrahl auf den während des vorhergehenden Schritts (P1, P2, P3) erzeugten Schweißstrangs zurück geführt wird, getrennt sind.

2. Verfahren nach Anspruch 1, **dadurch gekennzeichnet, dass** der Schritt in die umgekehrte Richtung (R₁, R₂) kürzer als die vorbestimmten Schritte (P₁, P₂, P₃) ist.

3. Verfahren nach Anspruch 2, **dadurch gekennzeichnet, dass** der Schritt in die umgekehrte Richtung (R₁, R₂) eine Länge im Wesentlichen gleich der Hälfte der Länge der vorbestimmten Schritte (P₁, P₂, P₃) hat.

4. Verfahren nach einem der Ansprüche 2 oder 3, **dadurch gekennzeichnet, dass** die Länge jedes der vorbestimmten Schritte (P₁, P₂, P₃) ungefähr gleich 5 mm ist, und jener jedes der Schritte in die umgekehrte Richtung (R₁, R₂) ungefähr gleich 2,5 mm ist.

## Claims

1. A process of welding together the two superposed edges (1a, 2a) of two sheets (1, 2) made of galvanised steel or of aluminium, in which, without removing the layer of zinc which covers the two sheets of galvanised steel or the layer of aluminium oxide which covers the two sheets of aluminium, a continuous bead of molten metal (3) is produced on the two superposed edges (1a, 2a) of the two sheets (1, 2) by creating an electric arc (4) between the end of these two edges (1a, 2a) and an electrode (5) or by sending on the end of these two edges (1a, 2a) a laser beam from a laser head, this electric arc (4) or laser beam being situated in a plane perpendicular to the plane in which the ends of these two superposed edges (1a, 2a) are situated, **characterized in that** this electric arc (4) or laser beam is moved in the direction of the length of these two edges along a succession of predetermined steps (P1, P2, P3) separated by a step in the reverse direction (R1, R2) during which the electric arc (4) or the laser beam passes back over the weld bead created during the preceding step (P1, P2, P3).

2. The process according to Claim 1, **characterized in that** said step in reverse direction (R₁, R₂) is shorter than said predetermined steps (P₁, P₂, P₃).

3. The process according to Claim 2, **characterized in that** said step in reverse direction (R₁, R₂) has a length substantially equal to half the length of said predetermined steps (P₁, P₂, P₃).

4. The process according to one of Claims 2 or 3, **characterized in that** the length of each of said predetermined steps (P₁, P₂, P₃) is equal to approximately 5 mm and that of each of said steps in reverse direction (R₁, R₂) is equal to approximately 2.5 mm.
